# EUROPÄISCHE PATENTSCHRIFT

(11) **EP 2 935 957 B1**
(45) Veröffentlichungstag und Bekanntmachung des Hinweises auf die Patenterteilung: **01.02.2017**
(21) Anmeldenummer: 13811936.7
(22) Anmeldetag: 19.12.2013
(51) Int. Cl.: F16K 17/06

(54) **VISKOSITÄTSABHÄNGIG EINSTELLBARES STROMREGELVENTIL**
VISCOSITY DEPENDENT ADJUSTABLE FLOW CONTROL VALVE
SOUPAPE DE RÉGULATION RÉGLABLE EN FONCTION DE VISCOSITÉ

(30) Priorität: 21.12.2012 DE 102012224257
(43) Veröffentlichungstag der Anmeldung: 28.10.2015
(73) Patentinhaber: Bielomatik Leuze GmbH + Co. Kg, 72639 Neuffen (DE)
(72) Erfinder: SENGÜL, Serdal, 72555 Metzingen (DE)
(74) Vertreter: Hoeger, Stellrecht & Partner Patentanwälte mbB
(86) Internationale Anmeldenummer: PCT/EP2013/077371
(87) Internationale Veröffentlichungsnummer: WO 2014/096189

(56) Entgegenhaltungen:
- DE-A1- 1 955 998
- DE-A1-102010 010 983
- US-A- 5 050 636
- US-A1- 2003 178 067

## Beschreibung

Die Erfindung betrifft ein Stromregelventil, aufweisend einen Regelkolben mit einer Drosselstelle für den Regelkolben sowie einen Einstellbolzen, gemäß den Merkmalen des Oberbegriffes des Patentanspruches 1.

Im Bereich Stromregelventile (insbesondere für Werkzeugmaschinen) gab es bisher viskositätsunabhängige und viskositätsabhängige Stromregelventile mit festen Blenden.

Die Erfindung bezieht sich auf hydrostatische Führungen im Schwermaschinenbau (z. B. Werkzeugmaschinen) mit stark schwankenden Umgebungstemperaturen. Hier gibt es Anforderungen an sehr hohe Maschinensteifigkeit sowie an die Einstellbarkeit der Hydrostatik bei Inbetriebnahme.

Bei sinkenden Umgebungstemperaturen bilden die hydrostatischen Führungen bedingt durch die ansteigende Ölviskosität einen wesentlich höheren Widerstand, so dass entsprechend weniger Medium strömen, insbesondere Öl fließen kann. Daher ist es zwingend notwendig, einen geregelten Soll-Volumenstrom entsprechend zu reduzieren. Je weniger die Maschine bzw. die Schmier- oder Lagerstelle auf Grund steigender Viskosität Öl aufnehmen kann, desto weniger Öl wird der Lagerstelle zugeführt. Zusätzlich kann auf Basis von einer einmaligen Messung bei Inbetriebnahme die Grundeinstellung der Ölmenge vorgenommen werden.

Bekannt sind viskositätsunabhängig manuell einstellbare Stromregler und nicht einstellbare viskositätunabhängige Stromregler, siehe Z.B. DE 10 2010 010 983 A1.

Zur Änderung der Grundeinstellung müssen die Ventile ausgewechselt oder die Führung nachbearbeitet werden. Alternativ dazu werden zur Anpassung an veränderte Temperaturverhältnisse viskositätsabhängige Stromregelventile eingesetzt.

Aufgabe ist es, einstellbare viskositätsabhängige Stromregelventile bereit zu stellen, welche sich an unterschiedliche Anforderungen anpassen.

Erfindungsgemäß ist vorgesehen, dass der Regelkolben in einem Teilbereich Nuten aufweist, wobei axial verschiebbar in diesem Teilbereich eine Nutbuchse sowie Einsätze in den Nuten angeordnet sind.

Das viskositätsabhängige Stromregelventil hat mehrere Nuten (insbesondere mit sehr unterschiedlichen Formen, z.B. U-, V-, T-förmige Nut, Schwalbenschwanznut) oder mehrere (insbesondere Scheiben-förmige) Ausschnitte am Umfang.

Zusätzlich ist eine Nutbuchse mit keilförmigen Ausschnitten in die vorhandene Nuten oder Ausschnitte angebracht. Diese Buchse wird auf einen zentral gelagerten Regelbolzen befestigt. Der Bolzen kann bei Bedarf mit Nuten versehen werden.

In Weiterbildung der Erfindung sind die Nutbuchse sowie die Einsätze einstückig ausgebildet. Dies hat den Vorteil, dass die Nutbuchse mit den Einsätzen, die sich nach der Montag der Nutbuchse in den Nuten des Regelkolbens befinden, einfach herstellen und aufgrund ihrer Einstückigkeit leicht und schnell montieren lässt. Außerdem ist im Einsatz dieser einstückigen Nutbuchse in dem Stromregelventil die Anzahl der bewegten Elemente deutlich reduziert.

In Weiterbildung der Erfindung ist ein Regelbolzen vorgesehen, der mit dem Einstellbolzen und der Nutbuchse zusammenwirkt. Von außen wird von einer Bedienperson der Einstellbolzen betätigt, der wiederum auf den Regelbolzen wirkt, wobei der Regelbolzen mit der Nutbuchse zusammenwirkt. Dadurch kann in diesem Falle durch die Einstellung an dem Einstellbolzen über den Regelbolzen der Bewegungsbereich und damit der Regelbereich der Nutbuchse bzw. des Regelbolzens eingestellt werden.

In Weiterbildung der Erfindung ist die Nutbuchse konzentrisch auf dem Regelbolzen angeordnet. Dadurch ist eine kompakte Bauweise gewährleistet, um nicht nur den Öldurchfluss, sondern auch die Viskositätsabhängigkeit herstellen zu können.

In Weiterbildung der Erfindung ist der Regelbolzen verdrehgesichert in Bezug auf den Einstellbolzen angeordnet, sodass der Regelbolzen axial verschoben wird, wenn der Einstellbolzen gedreht wird. Während aufgrund der konstruktiven Ausgestaltung von Regelkolben mit seinen Nuten sowie der Nutbuchse mit ihren Einsätzen eine relative verschiebende Bewegung zueinander erforderlich ist, wird durch die Entkopplung der Bewegungsrichtung zwischen dem Einstellbolzen und dem Regelbolzen gewährleistet, dass der Bediener des Stromregelventils den Einstellbolzen drehen kann, wodurch bewirkt wird, dass der Regelbolzen axial verschoben wird.

Der Regelbolzen wird, vorzugsweise verdrehgesichert, in einen größeren Einstellbolzen befestigt. Dadurch wird gewährleistet, dass beim Drehen des Einstellbolzens der Regelbolzen axial verstellt wird.

Durch diese axiale Verstellung wird die Spaltgröße zwischen Regelbolzen und Nutbuchse verändert und folglich somit der Öldurchfluss verstellt. Zusätzlich zu der Verstellung der Ölmenge ist das Stromregelventil viskositätsabhängig.

Der Kolben der Druckwaage wird 2-geteilt. Ein Teil bleibt beweglich, der andere Teil fügt sich mit geringen Spaltmaßen (ähnlich einer Keilwelle) über die gesamt Länge des anderen und ist an der Einstellspindel axial fixiert. Ein Kolben ist konisch, so dass sich bei Veränderung der Relativ-Bewegung die Spaltmaße verändern, was die Nennmenge verändert. Bei Krafteinwirkung auf die Maschine regelt der Kolben in der Richtung nach, dass die Fördermenge beibehalten wird und damit der maßlichen Veränderung entgegenwirkt, was die Maschine steifer und genauer macht. Das Öl fließt dabei durch die enge Spalte der Regelkolben, wodurch der Differenzdruck viskositätsabhängig wird.

Die Maschine kann so in vorteilhafter Weise bei Inbetriebnahme und eventuellen Verschleißerscheinungen eingestellt werden, sowie gleichzeitig auf veränderte Umgebungsbedingungen wie Temperaturschwankungen und Kraft reagieren.

Verwendbar für klassische Ölmengenregelungen und klassische hydrostatische Anwendungen. Erweiterung der Betätigung durch eine motorisch verstellbare Einstellung, die in einen Regelkreis eingebunden ist, der betriebsabhängig die Ölmenge verändert.

Beide Funktionen sind somit in dieser Lösung vereint: Einstellbar und Viskositätsabhängig

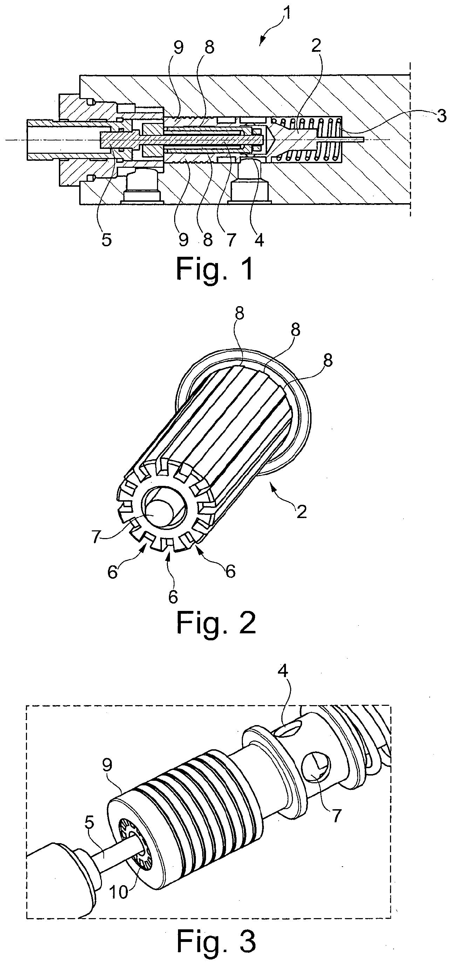

Ein Ausführungsbeispiel eines erfindungsgemäßen Stromregelventils ist in den Figuren 1 bis 3 dargestellt.

In Figur 1 ist, soweit im Einzelnen dargestellt, ein Stromregelventil 1 gezeigt, welches in an sich bekannter Weise einen Regelkolben 2 aufweist, der axial verschiebbar ist. Der Regelkolben 2 wird beispielsweise mittels einer Feder 3 verbunden, sodass er axial unter Zuhilfenahme der Kraft der Feder 3 oder gegen die Kraft der Feder 3 verschiebbar ist. Weiterhin ist mit 4 eine Drosselstelle für den Regelkolben 2 bezeichnet. Ebenfalls ist in der Gesamtheit der Darstellung des Stromregelventils 1 mit 5 ein Einstellbolzen bezeichnet, der in einem nicht näher bezeichneten Gehäuse des Stromregelventils 1 drehbar gelagert und von außen zugänglich ist. Im Übrigen ist der Aufbau des Stromregelventils 1 bekannt und es wird daher nicht näher auf die Anschlüsse für das Medium, insbesondere Öl, welches geregelt werden soll, eingegangen. Es versteht sich von selbst, dass das Stromregelventil 1 die hierfür bekannten und erforderlichen Anschlüsse und Wirkungsweisen aufweist.

Mit Blick auf Figur 2 wird erkennbar, dass der Regelkolben 2 in einem Teilbereich, vorzugsweise in einem seiner beiden Endbereiche, Nuten 6 aufweist. Bei der Ausgestaltung dieses Endbereiches des Regelkolbens 2 weist er eine axiale Durchgangsbohrung auf, in die ein Regelbolzen 7 (in Figur 2 abschnittsweise gezeigt) hineinragt bzw. durchgeführt ist. In die Nuten 6 des Regelkolbens 2 sind axial verschiebbar Einsätze 8 angeordnet. Der Querschnitt der Einsätze 8 korrespondiert mit dem Querschnitt der Nuten 6, wobei radial umlaufend die miteinander korrespondierenden Querschnitte alle gleich, gruppenweise gleich, jedoch von Gruppe zu Gruppe unterschiedlich, oder vollständig voneinander unterschiedlich ausgestaltet sind.

Mit Blick auf Figur 3 ist erkennbar, dass eine Nutbuchse 9 vorhanden ist. Diese Nutbuchse 9 ist ebenfalls axial verschiebbar auf dem Regelkolben 2 angeordnet. Die Nutbuchse 9 weist wiederum eine Drosselstelle 10 für den Regelbolzen 7 auf. Der Regelbolzen 7 ist axial verschiebbar innerhalb des Regelkolbens 2 angeordnet und so ausgestaltet, dass er, wenn er axial verschoben wird, auf die Nutbuchse 9 wirken kann. Die Ausgestaltung kann aber auch so realisiert sein, dass mittels des Regelbolzens 7 der Durchflussquerschnitt der Drosselstelle 4 beeinflusst wird, wenn der Regelbolzen 7 mittels Einstellung des Einstellbolzens 5 axial verschoben wird. Gleiches gilt für die Durchflussöffnung zwischen dem Regelkolben 2 in dem Teilbereich, in dem die Nuten 6 vorhanden sind, und der inneren Geometrie der Nutbuchse 9. Diese Geometrie ist im Falle der Einstückigkeit von Einsätzen 8 und Nutbuchse 9 so gestaltet, dass die innere Geometrie der Nutbuchse 9 zwischen den Einsätzen 8 auf der Oberfläche der Stege zwischen den Nuten 6 aufliegt oder einen definierten Abstand bildet. Hierdurch und/oder durch die axiale Verschiebbarkeit der Einsätze 8 (entweder einzeln, gruppenweise oder gemeinsam, vorzugsweise gemeinsam mit der Nutbuchse 9) wird im Stirnbereich des Regelkolbens 2 und somit im Bereich der Drosselstelle 10 ein Raum innerhalb der Nuten 6 vergrößert oder verkleinert, je nachdem, wo sich die Einsätze 8 innerhalb der Nuten 6 befinden. Somit kann in erfindungsgemäßer Weise nicht nur der Durchfluss des Mediums, insbesondere der Öldurchfluss, verstellt werden, sondern zusätzlich zu dieser Verstellung der Menge des Mediums, insbesondere der Ölmenge, ist das Stromregelventil in seiner Wirkungsweise automatisch abhängig von der Viskosität des verwendeten Mediums. Dadurch entfällt in vorteilhafter Weise das Auswechseln solcher Stromregelventile bei sich ändernden Viskositäten des verwendeten Mediums. Das Einsatzspektrum des erfindungsgemäßen Stromregelventils wird somit deutlich vergrößert.

### Bezugszeichenliste:

1. Stromregelventil
2. Regelkolben
3. Feder
4. Drosselstelle (des Regelkolbens)
5. Einstellbolzen
6. Nuten
7. Regelbolzen
8. Einsätze
9. Nutbuchse
10. Drosselstelle (des Einstellbolzens)

## Patentansprüche

1. Stromregelventil (1), aufweisend einen Regelkolben (2) mit einer Drosselstelle (4) für den Regelkolben (2) sowie einen Einstellbolzen (5), **dadurch gekennzeichnet, dass** der Regelkolbens (2) in einem Teilbereich Nuten (6) aufweist, wobei axial verschiebbar in diesem Teilbereich eine Nutbuchse (9) sowie Einsätze (8) in den Nuten (6) angeordnet sind.

2. Stromregelventil (1) nach Anspruch 1, **dadurch gekennzeichnet, dass** die Nutbuchse (9) sowie die Einsätze (8) einstückig ausgebildet sind.

3. Stromregelventil (1) nach Anspruch 1 oder 2, **dadurch gekennzeichnet, dass** ein Regelbolzen (7) vorgesehen ist, der mit dem Einstellbolzen (5) und der Nutbuchse (9) zusammenwirkt.

4. Stromregelventil (1) nach Anspruch 3, **dadurch gekennzeichnet, dass** die Nutbuchse (9) konzentrisch auf dem Regelbolzen (7) angeordnet ist.

5. Stromregelventil (1) nach Anspruch 1, **dadurch gekennzeichnet, dass** der Regelbolzen (7) verdrehgesichert in Bezug auf den Einstellbolzen (5) angeordnet ist, so dass der Regelbolzen (7) axial verschoben wird, wenn der Einstellbolzen (5) gedreht wird.

6. Stromregelventil (1) nach einem der vorhergehenden Ansprüche, **dadurch gekennzeichnet, dass** die Nuten (6) in sehr unterschiedlichen Formen, z.B. U-, V-, T-förmige Nuten, Schwalbenschwanznut und dergleichen, gestaltet sind.

7. Stromregelventil (1) nach einem der vorhergehenden Ansprüche, **dadurch gekennzeichnet, dass** das Stromregelventil mehrere, insbesondere scheibenförmige Ausschnitte am Umfang aufweist.

## Claims

1. Flow control valve (1), having a control piston (2) which has a throttle point (4) for the control piston (2) and also an adjusting pin (5), **characterised in that** a portion of the control piston (2) has grooves (6), wherein a grooved bush (9) and also inserts (8) in said grooves (6) are arranged axially displaceably in this region.

2. Flow control valve (1) according to claim 1, **characterised in that** the grooved bush (9) and the inserts (8) are formed in one piece.

3. Flow control valve (1) according to claim 1 or 2, **characterised in that** a control pin (7) is provided, which cooperates with the adjusting pin (5) and the grooved bush (9).

4. Flow control valve (1) according to claim 3, **characterised in that** the grooved bush (9) is arranged concentrically on the control pin (7).

5. Flow control valve (1) according to claim 1, **characterised in that** the control pin (7) is arranged in manner secured against rotation with respect to the adjusting pin (5), such that the control pin (7) is axially displaced when the adjusting pin (5) is turned.

6. Flow control valve (1) according to any one of the preceding claims, **characterised in that** the grooves (6) are shaped in very different forms, for example U-, V-, or T-shaped grooves, dovetail groove, and the like.

7. Flow control valve (1) according to any one of the preceding claims, **characterised in that** the flow control valve has, at the periphery, a plurality of cut-outs, which in particular are disc-shaped.

## Revendications

1. Soupape de régulation de débit (1), présentant un piston de régulation (2) comprenant un point d'étranglement (4) pour le piston de régulation (2), ainsi qu'un boulon de réglage (5), **caractérisée en ce que** le piston de régulation (2) présente, dans une zone partielle, des rainures (6), dans laquelle une douille rainurée (9) ainsi que des pièces rapportées (8) sont disposées dans les rainures (6) de manière à pouvoir être coulissées axialement dans ladite zone partielle.

2. Soupape de régulation de débit (1) selon la revendication 1, **caractérisée en ce que** la douille rainurée (9) ainsi que les pièces rapportées (8) sont réalisées d'un seul tenant.

3. Soupape de régulation de débit (1) selon la revendication 1 ou 2, **caractérisée en ce qu'**un boulon de régulation (7) est prévu, lequel coopère avec le boulon de réglage (5) et la douille rainurée (9).

4. Soupape de régulation de débit (1) selon la revendication 3, **caractérisée en ce que** la douille rainurée (9) est disposée de manière concentrique sur le boulon de régulation (7).

5. Soupape de régulation de débit (1) selon la revendication 1, **caractérisée en ce que** le boulon de régulation (7) est disposé de manière bloquée en rotation par rapport au boulon de réglage (5) de sorte que le boulon de régulation (7) soit déplacé par un coulissement axial, quand le boulon de réglage (5) est tourné.

6. Soupape de régulation de débit (1) selon l'une quelconque des revendications précédentes, **caractérisée en ce que** les rainures (6) sont configurées selon des formes très différentes, par exemple sous la forme de rainures présentant une forme de U, de V, de T, sous la forme d'une rainure en queue d'aronde et similaire.

7. Soupape de régulation de débit (1) selon l'une quelconque des revendications précédentes, **caractérisée en ce que** la soupape de régulation de débit présente au niveau de la périphérie plusieurs découpes en particulier présentant une forme de disque.
